# EUROPÄISCHE PATENTANMELDUNG

(11) **EP 2 012 209 A1**
(43) Veröffentlichungstag der Anmeldung: **07.01.2009**
(21) Anmeldenummer: 07012937.4
(22) Anmeldetag: 02.07.2007
(51) Int. Cl.: G05B 23/02

(54) **Verfahren zum Ermitteln der Lebensdauer einer Kraftwerkskomponente**

(71) Anmelder: SIEMENS AKTIENGESELLSCHAFT, 80333 München (DE)
(72) Erfinder: Kunze, Ulrich, Dr., 91088 Bubenreuth (DE); Römpke, Arno, 91077 Neunkirchen A.Br. (DE)

(57) **Zusammenfassung**

Es wird ein Verfahren (10) zum Ermitteln der Lebensdauer einer Kraftwerkskomponente mit folgenden Schritten vorgeschlagen: Definieren (18) einer ersten Kenngröße (EOH) für eine Lebensdauer der Kraftwerkskomponente bei konstanter Leistung, Definieren (18) einer zweiten Kenngröße (NES) für eine Lebensdauer der Kraftwerkskomponente bei sich ändernder Leistung, Definieren (20) einer ersten Äquivalenzvorschrift, mittels der ein vordefinierter Betrieb der Kraftwerkskomponente bei konstanter Leistung in Abhängigkeit einer Anzahl an ersten Kenngrößen abgebildet wird, Definieren (20) einer zweiten Äquivalenzvorschrift, mittels der ein vordefinierter Betrieb der Kraftwerkskomponente bei sich ändernder Leistung in Abhängigkeit einer Anzahl an zweiten Kenngrößen abgebildet wird, Ermitteln (24, 26) der sich während des tatsächlichen Betriebs der Kraftwerkskomponente ergebenden Anzahlen an ersten und zweiten Kenngrößen, Ermitteln der Summe (28) der Anzahlen an ersten und zweiten Kenngrößen, Beurteilen (22, 28) der Lebensdauer der Kraftwerkskomponente anhand der ermittelten Summe.

## Beschreibung

Die Erfindung betrifft ein Verfahren zum Ermitteln der Lebensdauer einer Kraftwerkskomponente, wobei unter Lebensdauer die maximale Betriebszeit der Kraftwerkskomponente verstanden wird, bis diese gewartet oder ersetzt werden muss.

Die Lebensdauer von Kraftwerkskomponenten wird derzeit in der Regel dadurch ermittelt, dass zunächst die am höchsten belasteten Bauteile der Kraftwerkskomponente ausgewählt werden und dann für diese Bauteile einzeln deren Erschöpfung ermittelt wird. Bei der Ermittelung der Erschöpfung werden insbesondere Methoden der Zeitstand- und Dehnungswechselerschöpfung verwandt.

So ist es für detaillierte Spannungsanalysen von Bauteilen an Kraftwerkskomponenten bekannt, die Finite-Elemente-Methode einzusetzen. Bei dieser Methode werden Differenzialgleichungssysteme gelöst, die die im Bauteil herrschenden Spannungen beschreiben. Eingangsgrößen für die Differenzialgleichungen sind beispielsweise die Druck- und Temperaturverläüfe eines Mediums um das Bauteil. Aus den berechneten Spannungen werden dann die Materialbelastungen detailgenau berechnet.

Nachteilig ist an den bekannten Verfahren, dass sie nur Ergebnisse zur Erschöpfung einzelner Bauteile oder gar nur von Abschnitten von Bauteilen liefern, wohingegen eine bauteilübergreifende, so genannte integrale Bewertung der Lebensdauer der gesamten Kraftwerkskomponente, wenn überhaupt, nur mit großem Aufwand möglich ist. Eine solche übergeordnete Bewertung bedarf insbesondere in der Regel der Interpretation der für die einzelnen Bauteile ermittelten Ergebnisse durch Experten.

Eine andere Möglichkeit zum Ermitteln der Lebensdauer von Kraftwerkskomponenten besteht darin, dass während der Auslegung der Kraftwerkskomponente eine vordefinierte Anzahl an Betriebsstunden und Starts bzw. Trips (also Leistungswechsel der Kraftwerkskomponente) festgelegt wird.

So beruht ein vergleichsweise einfaches bekanntes Verfahren auf dem Zählen der Betriebsstunden und der Lastwechsel auf der Basis von vorberechneten Druck- und Temperaturspannungen in den Bauteilen einer Kraftwerkskomponente und deren anschließender Vergleich mit experimentell ermittelten Werten der Zeitstandfestigkeit und der Anrisslastwechselzahlen. Diese Verfahren dienen zum Ermitteln der Lebensdauer an Kraftwerkskesseln (vgl. DIN EN 12952/4:2001-10 "Wasserrohrkessel und Anlagenkomponenten, Teil 4: Betriebsbegleitende Berechnung der Lebensdauererwartung, Deutsche Fassung EN 12952-4:2000"), wobei derartige Kessel eine besondere Art von Kraftwerkskomponente darstellen, bei der aufgrund der besonderen Betriebsbedingungen auch eine besondere Art der Lebensdauerermittlung erforderlich wird.

Die letztgenannte Möglichkeit scheitert in der Regel aber daran, dass die Kraftwerkskomponente im eigentlichen Betrieb dann anders gefahren wird, als während der Auslegung unterstellt wurde.

Der Erfindung liegt die Aufgabe zugrunde ein Verfahren zum Ermitteln der Lebensdauer einer Kraftwerkskomponente bereitzustellen, mit dem die oben genannten Nachteile überwunden sind und insbesondere eine übergreifende, integrale Beurteilung der Lebensdauer von Kraftwerkskomponenten auf besonders einfache Weise möglich ist. Im Hinblick auf die Genauigkeit der Lebensdauerermittlung können durchaus Kompromisse eingegangen werden, solange die Ermittlung schnell Resultate liefert, die insbesondere ohne Spezialkenntnis interpretiert werden können.

Die Aufgabe ist erfindungsgemäß mit einem Verfahren gemäß Anspruch 1 gelöst. Vorteilhafte Weiterbildungen der erfindungsgemäßen Lösung sind in den abhängigen Ansprüchen beschrieben.

Gemäß der Erfindung wird ein Verfahren zum Ermitteln der Lebensdauer einer Kraftwerkskomponente vorgeschlagen, welches die folgenden Schritte umfasst: Definieren einer ersten Kenngröße für eine Lebensdauer der Kraftwerkskomponente bei konstanter Leistung, Definieren einer zweiten Kenngröße für eine Lebensdauer der Kraftwerkskomponente bei sich ändernder Leistung, Definieren einer ersten Äquivalenzvorschrift, mittels der ein vordefinierter Betrieb der Kraftwerkskomponente bei konstanter Leistung in Abhängigkeit einer Anzahl von ersten Kenngrößen abgebildet wird, Definieren einer zweiten Äquivalenzvorschrift, mittels der ein vordefinierter Betrieb der Kraftwerkskomponente bei sich ändernder Leistung in Abhängigkeit einer Anzahl an zweiten Kenngrößen abgebildet wird, ermitteln der sich während des tatsächlichen Betriebs der Kraftwerkskomponente ergebenden Anzahlen an ersten und zweiten Kenngrößen, Ermitteln der Summe der Anzahlen an ersten und zweiten Kenngrößen, Beurteilen der Lebensdauer der Kraftwerkskomponente anhand der ermittelten Summe.

Das erfindungsgemäße Verfahren geht von der bekannten Vorgehensweise aus, bei der einer Kraftwerkskomponente während der Auslegung eine zu erreichende Lebensdauer unterstellt wird. Dabei wird ein Lastkollektiv angenommen, das weitestgehend dem später zu erwartenden Betrieb der Kraftwerkskomponente entsprechen soll. Das derartige Lastkollektiv besteht beispielsweise aus einer garantierten Anzahl von Normalbetriebsstunden und einer garantierten Anzahl von Starts und Trips der Kraftwerkskomponente in Form von vordefinierten Fahrweisen der Kraftwerkskomponente. Wie oben erläutert kann aber die tatsächliche Fahrweise der Kraftwerkskomponente gemäß dem Auslegungslastkollektiv nicht direkt mit der tatsächlichen Fahrweise der Kraftwerkskomponente verglichen werden. Das erfindungsgemäße Verfahren definiert nun darüber hinaus für die Bewertung der Lebensdauer einer Kraftwerkskomponente integrale Kenngrößen mit Äquivalenz- bzw. Berechnungsvorschriften und ermittelt daraus eine Summe der Anzahlen an Kenngrößen, welche dann eine Gesamtaussage für die Beurteilung der Lebensdauer der Kraftwerkskomponente zulässt. Die Summe der Anzahlen an Kenngrößen kann insbesondere in Relation zu Grenzwerten gesetzt werden, mittels derer dann die erforderlichen Wartungs- und/oder Austauschintervalle für die Kraftwerkskomponente definiert werden können.

Die erfindungsgemäße Lösung basiert insbesondere auf der Einführung zweier Kenngrößen zur integralen Lebensdauerbewertung von Kraftwerkskomponenten, von denen sich eine erste Kenngrö-βe auf die Lebensdauer der Kraftwerkskomponente bei konstanter Leistung und eine zweite Kenngröße auf die Lebensdauer der Kraftwerkskomponente bei sich ändernder Leistung bezieht. Mittels zugehöriger Äquivalenzvorschriften wird erfindungsgemäß die tatsächliche Fahrweise bzw. der tatsächliche Betrieb der Kraftwerkskomponente in eine sich ergebende Anzahl an ersten und zweiten Kenngrößen umgerechnet. Es wird dann die Summe der Anzahlen an ersten und zweiten Kenngrößen ermittelt, auf deren Basis schließlich die Lebensdauer der Kraftwerkskomponente integral bzw. übergreifend ermittelt werden kann. Die Äquivalenzvorschriften können beispielsweise derart formuliert werden, dass ausgehend von einer äquivalenten Betriebsstunde bei vordefinierter konstanter Leistung eine sich tatsächlich ergebende Betriebsstunde bei einer aber viel höheren konstanten Leistung durch eine entsprechend hohe Anzahl an äquivalenten Betriebsstunden definiert wird. In ähnlicher Weise kann ein äquivalenter Start bei vordefinierter sich ändernder Leistung festgelegt werden, von dem ausgehend dann bei einem sich tatsächlich ergebenden Start mit anderer sich ändernder Leistung eine entsprechende Anzahl an äquivalenten Starts ermittelt wird.

So umfasst die erfindungsgemäße Lösung insbesondere zwei Stufen, wobei bei einer ersten Stufe für die genannten Kenngrößen einmalig Äquivalenzvorschriften bzw. Berechnungsvorschriften festgelegt werden und dann in einer zweiten Stufe durch kontinuierliches Zählen und Überwachen der festgelegten Kenngrößen (wie erwähnt beispielsweise äquivalente Betriebsstunden und äquivalente Starts) während des Betriebs der Kraftwerkskomponente die Summe der Anzahlen an Kenngrößen ermittelt wird.

Besonders vorteilhaft kann das erfindungsgemäße Verfahren für die Ermittlung der Lebensdauer bei einem Kraftwerkskessel als Kraftwerkskomponente durchgeführt werden. Dies gilt insbesondere, weil an derartigen Kraftwerkskesseln nur wenige Betriebsparameter für die erfindungsgemäß zu definierenden Äquivalenzvorschriften festgelegt werden können. So können die erfindungsgemäßen Äquivalenzvorschriften sich besonders vorteilhaft auf die Frischdampfdrucksituation und/oder die sich während eines Betriebsfalls ergebende Temperaturdifferenz am Kraftwerkskessel beziehen.

Die oben genannte äquivalente Betriebsstunde wird bei dem erfindungsgemäßen Verfahren besonders vorteilhaft als eine Betriebsstunde der Kraftwerkskomponente bei Nennparametern definiert. Die Nennparameter bilden den Ausgangspunkt für Spezifikationsdaten des Betriebsfalls, von dem ausgehend dann erfindungsgemäß insbesondere mittels einer Gewichtung eine Umrechung von sich allgemein ergebenden Betriebsfällen auf diese Standardbetriebsfälle festgelegt wird. Die Gewichtung wird insbesondere so bestimmt, dass sie den Lebensdauerverbrauch einzelner, besonders zu wartender oder reparierender Bauteile der Kraftwerkskomponente abbildet.

Besonders vorteilhaft wird die erste Äquivalenzvorschrift dabei als Funktion aus einem Ist-Zeitparameter, mindesten einem Ist-Betriebsparameter der Kraftwerkskomponente und einem Gewichtungsfaktor definiert. So lautet eine Äquivalenz- bzw. Berechnungsvorschrift für eine äquivalente Betriebsstunde eines Kraftwerkskessels vorteilhaft: t_{EOH} = t ^{x} (p/p₀)^{Λ}, wobei t_{EOH} = äquivalente Betriebsstunde, t = Zeit (in Stunden) p = Frischdampfdruck im betrachten Betriebsfall, p₀ = Frischdampfdruck bei Nennleistung, Λ = Gewichtung.

Als zweite Kenngröße wird erfindungsgemäß besonders vorteilhaft ein typischer Kaltstart bei Nennparametern der Kraftwerkskomponente definiert.

Alternativ oder zusätzlich wird vorteilhaft die zweite Kenngröße als ein halber typischer Warmstart bei Nennparametern der Kraftwerkskomponente definiert.

Besonders vorteilhaft basiert die Äquivalenzvorschrift für die Kenngröße für eine Lebensdauer der Kraftwerkskomponente bei sich ändernder Leistung auf für drei Betriebsfälle unterschiedlichen Berechnungsvorschriften, wobei die zweite Kenngröße in einem ersten Betriebsfall aus einem konstanten Wert ungleich Null gebildet wird, die zweite Kenngröße in einem zweiten Betriebsfall aus mindestens einem Ist-Betriebsparameter der Kraftwerkskomponente und einem Gewichtungsfaktor berechnet wird, und in einem dritten Betriebsfall die zweite Kenngröße aus dem Wert Null gebildet wird. Die Berechnungsvorschriften basieren dabei auf so genannten Transienten (dies bedeutet einen zeitlich begrenzten Verlauf der Betriebsparameter an der Kraftwerkskomponente, in denen die Kraftwerkskomponente von einem Betriebszustand in einen anderen übergeht).

Die Transienten werden klassifiziert in den ersten Betriebsfall des Trips bzw. Lastabwurfs, bei dem die zweite Kenngröße erfindungsgemäß ein konstanter Wert ungleich Null, beispielsweise 20, annimmt.

Als zweiter Betriebsfall wird eine so genannte relevante Transiente definiert, bei der die zweite Kenngröße aus mindestens einem Ist-Betriebsparameter der Kraftwerkskomponente und einem Gewichtungsfaktor berechnet wird. So kann bei einem derartigen relevanten Leistungsübergang beispielsweise als zweite Kenngröße eine Anzahl äquivalenter Starts wie folgt berechnet werden: n_{NES} = K * ΔT * max(ΔT/Δt) wobei n_{NES} = Anzahl der äquivalenten Starts, K = aus typischem Start ermittelte Konstante bzw. Gewichtung, ΔT = Temperaturdifferenz während des Betriebsfalls, ΔT/Δt = Temperaturgradient während des Betriebsfalls.

Als so genannte sonstige Transiente wird schließlich ein dritter Betriebsfall definiert, bei dem zwar eine Leistungsänderung stattfindet, der aber auf die eigentliche Lebensdauer der Kraftwerkskomponente keinen oder nahezu keinen Einfluss hat, sodass dabei die zweite Kenngröße mit dem Wert 0 belegt wird.

Um das erfindungsgemäße Verfahren weiter zu vereinfachen und insbesondere eine Lebensdauerermittlung gegenüber nur einem Grenzwert möglich zu machen, ist es vorteilhaft, ausgehend von den ersten und zweiten Kenngrößen jeden Betriebsfall in eine einzige Kenneinheit umzurechnen. So wird besonders vorteilhaft dabei die zweite Kenngröße in eine vorbestimmte Anzahl erster Kenngrößen umgerechnet. So kann vorteilhaft die oben genannte Anzahl äquivalenter Starts in eine Anzahl äquivalenter Stunden umgerechnet werden, sodass nur ein Grenzwert gebildet und auch nur ein Vergleich im Hinblick auf die zulässige Lebensdauer erforderlich ist.

Die erfindungsgemäße Lösung lässt sich weiter dadurch modifizieren, dass die Äquivalenz- bzw. Berechnungsvorschriften und insbesondere die darin verwendete Gewichtung auf der Grundlage einer Gegenüberstellung der mit den vorbestimmten Kenngrö-βen vorermittelten Lebensdauer der Kraftwerkskomponente und der sich tatsächlich ergebenden Lebensdauer der Kraftwerkskomponente angepasst werden. Dabei kann insbesondere bei Kraftwerkskesseln als Kraftwerkskomponente auf bekannte Daten des Betriebs von vorhandenen Kraftwerkskesseln zurückgegriffen werden und es können ggf. auch andere Hauptparameter der Kraftwerkskessel in die vorgesehenen Äquivalenzvorschriften aufgenommen werden.

Das erfindungsgemäße Verfahren zum Ermitteln der Lebensdauer einer Kraftwerkskomponente hat insbesondere den Vorteil, dass für seine Anwendung keine Spezialkenntnisse erforderlich sind. Für den Hersteller der Kraftwerkskomponente und insbesondere einen Kraftwerkskesselhersteller bietet das Verfahren den Vorteil, das Vorgaben des Auslegungslastkollektivs einfach auf die tatsächliche Fahrweise umgerechnet werden können. Da erfindungsgemäß die verwendeten Gewichtungen innerhalb der Äquivalenzvorschriften einfach modifiziert werden können, lassen sich die für eine Kraftwerkskomponente bestimmten Parameter leicht auf andere Kraftwerkskomponenten übertragen. Dies ist wiederum insbesondere im Hinblick auf Kraftwerkskessel als Kraftwerkskomponente von großem Vorteil.

Für die Reparatur und Instandhaltung insbesondere von Kraftwerkskesseln bietet das erfindungsgemäße Verfahren den Vorteil, dass die Revisionszeitpunkte in besonders einfacher Weise abhängig von der tatsächlichen Fahrweise des Kraftwerkskessels festgelegt werden können.

Nachfolgend wird ein erfindungsgemäßes Verfahren zum Ermitteln der Lebensdauer einer Kraftwerkskomponente anhand der beigefügten schematischen Zeichnungen näher erläutert.

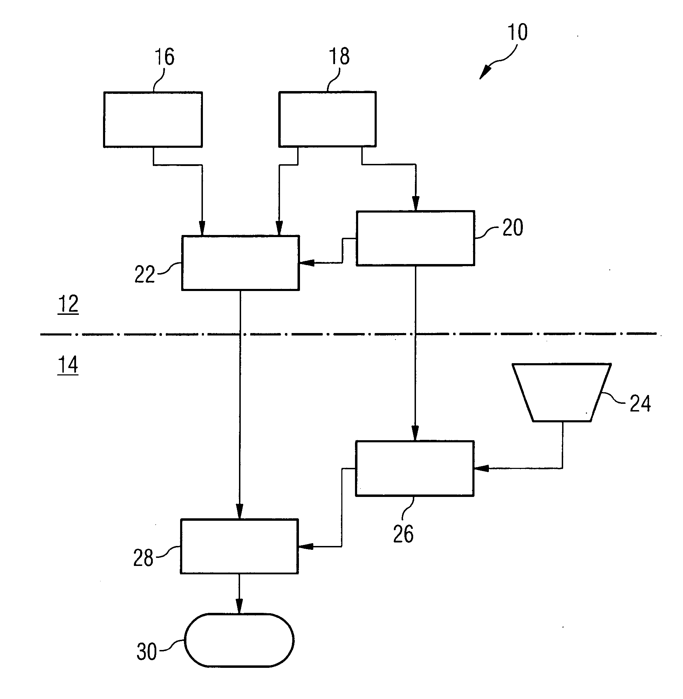

Es zeigt die Figur ein Ablaufdiagramm eines Ausführungsbeispiels des erfindungsgemäßen Verfahrens.

Das in der Figur veranschaulichte Verfahren 10 wird im Wesentlichen in zwei Stufen 12 und 14 ausgeführt. Innerhalb der Stufe 12 werden dabei in einem ersten Schritt 16 Auslegungslastkollektive für eine vorliegend nicht näher dargestellte Kraftwerkskomponente in Gestalt eines Kraftwerkskessels festgelegt.

Parallel dazu wird in einem Schritt 18 eine Gruppe von Spezifikationsdaten zumindest eines Betriebsfalls für eine äquivalente Betriebsstunde (EOH) und zumindest eines Betriebsfalls für einen äquivalenten Start (NES) festgelegt.

Ferner werden in einem Schritt 20 eine Gruppe von Spezifikationsdaten der Gewichte bzw. der Gewichtung zur Umrechnung allgemeiner Betriebsfälle in die vordefinierten bzw. spezifizierten Betriebsfälle festgelegt. Diese Spezifikationsdaten der Gewichte zur Umrechnung allgemeiner Betriebsfälle stellen Äquivalenzvorschriften dar, mittels derer ein vordefinierter Betrieb der Kraftwerkskomponente zum einen bei konstanter Leistung und zum anderen bei sich ändernder Leistung in Abhängigkeit einer Anzahl an Kenngrößen abgebildet wird. Die Kenngrößen sind zum einen die oben genannte äquivalente Betriebsstunde (als Kenngröße für eine Lebensdauer der Kraftwerkskomponente bei konstanter Leistung) und zum anderen der oben genannte äquivalente Start (als Kenngröße für eine Lebensdauer der Kraftwerkskomponente bei sich ändernder Leistung).

In einem Schritt 22 werden ferner auf der Grundlage der oben genannten Auslegungslastkollektive (siehe Schritt 16), der Spezifikationsdaten des Betriebsfalls für eine äquivalente Betriebsstunde und des Betriebsfalls für einen äquivalenten Start (siehe Schritt 18) und der Spezifikationsdaten der Gewichte zur Umrechnung allgemeiner Betriebsfälle (siehe Schritt 20) Grenzwerte definiert, mittels derer während des Betriebs des Kraftwerkskessels Revisionszeitpunkte festgelegt werden.

In der zweiten Stufe 14 des erfindungsgemäßen Verfahrens 10 werden während des eigentlichen Betriebs des Kraftwerkskessels in einem Schritt 24 Messwerterfassungsdaten von Hauptparametern des Kraftwerkskessel, nämlich insbesondere dessen Leistung, dessen Temperaturen an Bauteilen und dessen Drücke an Bauteilen, mitgeschrieben und ggf. zwischengespeichert. In einem Schritt 26 wird nachfolgend auf der Grundlager dieser ermittelten Messwerterfassungsdaten und der im Schritt 20 festgelegten Äquivalenzvorschriften die sich ergebende Anzahl an ersten und zweiten Kenngrößen, nämlich die Anzahl an äquivalenten Betriebsstunden (EOH) und die Anzahl an äquivalenten Starts (NES) ermittelt.

So wird beispielsweise auf der Grundlage einer Äquivalenz- bzw. Berechnungsvorschrift für äquivalente Betriebsstunden (EOH) festgelegt, wie groß die Anzahl an äquivalenten Betriebsstunden im Hinblick auf eine tatsächlich vorliegende Anzahl an Betriebsstunden bei einer anderen Frischdampfdrucksituation sein soll. Dies erfolgt im vorliegenden Beispiel anhand der Berechnungsvorschrift: t_{EOH} =t * (p/p₀)^{Λ}, wobei t_{EOH} = äquivalente Betriebsstunden, t = Zeit (in Stunden), p = Frischdampfdruck im betrachten Betriebsfall, p₀ = Frischdampfdruck bei Nennleistung und Λ = Exponent zur Gewichtung für EOH, vorliegende z.B. 3,0.

Eine weitere Berechnungsvorschrift für die äquivalenten Starts (NES) basiert auf so genannten Transienten, welche einen zeitlich begrenzten Verlauf der Betriebsparameter betreffen, in dem die Kraftwerkskomponente von einem Betriebszustand in einen anderen übergeht. Die Transienten werden zunächst klassifiziert in drei Betriebsfälle, wobei ein erster Betriebsfall als Trip bzw. Lastabwurf definiert wird, ein zweiter Betriebsfall als so genannte relevante Transiente und ein dritter Betriebsfalls als so genannte sonstige Transiente. Die Äquivalenz- bzw. Berechnungsvorschrift für die äquivalenten Starts (NES) wird dann wie folgt festgelegt: Für den ersten Betriebsfall n_{NES} = 20, für den zweiten Betriebsfall n_{NES}= K * ΔT * max(ΔT/Δt), und für den dritten Betriebsfall n_{NES} = 0, wobei n_{NES} = Anzahl der äquivalenten Starts, K = aus typischem Start ermittelte Konstante zur Gewichtung für NES, ΔT = Temperaturdifferenz während des Betriebsfalls und ΔT/Δt = Temperaturgradient während des Betriebsfalls.

Die Grenzwerte werden unter Berücksichtigung der Äquivalenz bzw. Berechnungsvorschriften sowie der Parameter der Lastfälle des jeweiligen Auslegungslastkollektivs bestimmt, indem die Gewichte und Berechnungsvorschriften auf die Betriebsfälle des Auslegungslastkollektivs angewendet werden. Im Ergebnis werden xEOH und yNES als Grenzwerte (G) erhalten.

Aus diesen Gewichten und Äquivalenzvorschriften sowie den im Schritt 24 gemessenen Hauptparametern des Kraftwerkskessels (Leistung, Temperaturen und Drücke) werden also die Kenngrößen EOH und NES bestimmt und gezählt, sodass während des Betriebs stets ihr aktuell erreichter Wert, also die Anzahl an ersten und zweiten Kenngrößen, vorliegt.

In einem Schritt 28 wird diese Anzahl mit den im Schritt 22 definierten Grenzwerten derart verglichen, dass zunächst die Summe der Anzahlen an ersten und zweiten Kenngrößen gebildet und nachfolgend mit den entsprechenden Grenzwerten für die festgelegten Revisionszeitpunkte verglichen wird.

Das Ergebnis wird in einem Schritt 30 ausgegeben, sodass insgesamt eine schnelle und einfach durchzuführende Beurteilung der Revisionssituation des Kraftwerkskessels möglich ist.

## Patentansprüche

1. Verfahren (10) zum Ermitteln der Lebensdauer einer Kraftwerkskomponente mit den Schritten:
Definieren (18) einer ersten Kenngröße (EOH) für eine Lebensdauer der Kraftwerkskomponente bei konstanter Leistung, Definieren (18) einer zweiten Kenngröße (NES) für eine Lebensdauer der Kraftwerkskomponente bei sich ändernder Leistung,
Definieren (20) einer ersten Äquivalenzvorschrift, mittels der ein vordefinierter Betrieb der Kraftwerkskomponente bei konstanter Leistung in Abhängigkeit einer Anzahl an ersten Kenngrößen abgebildet wird,
Definieren (20) einer zweiten Äquivalenzvorschrift, mittels der ein vordefinierter Betrieb der Kraftwerkskomponente bei sich ändernder Leistung in Abhängigkeit einer Anzahl an zweiten Kenngrößen abgebildet wird,
Ermitteln (24, 26) der sich während des tatsächlichen Betriebs der Kraftwerkskomponente ergebenden Anzahlen an ersten und zweiten Kenngrößen,
Ermitteln der Summe (28) der Anzahlen an ersten und zweiten Kenngrößen,
Beurteilen (22, 28) der Lebensdauer der Kraftwerkskomponente anhand der ermittelten Summe.

2. Verfahren nach Anspruch 1,
bei dem die Ermittlung (24, 26) bei einem Kraftwerkskessel als Kraftwerkskomponente durchgeführt wird.

3. Verfahren nach Anspruch 1 oder 2,
bei dem die erste Kenngröße (EOH) als eine Betriebsstunde der Kraftwerkskomponente bei Nennparametern definiert wird.

4. Verfahren nach einem der Ansprüche 1 bis 3,
bei dem die erste Äquivalenzvorschrift als Funktion aus einem Ist-Zeitparameter, mindestens einem Ist-Betriebsparameter der Kraftwerkskomponente und einem Gewichtungsfaktor definiert wird.

5. Verfahren nach einem der Ansprüche 1 bis 4,
bei dem die zweite Kenngröße (NES) als ein typischer Kaltstart bei Nennparametern der Kraftwerkskomponente definiert wird.

6. Verfahren nach einem der Ansprüche 1 bis 5,
bei dem die zweite Kenngröße als ein halber typischer Warmstart bei Nennparametern der Kraftwerkskomponente definiert wird.

7. Verfahren nach Anspruch 5 oder 6,
bei dem die zweite Kenngröße (NES) in drei Betriebsfällen unterschiedlich aufgestellt wird, wobei die zweite Kenngröße in einem ersten Betriebsfall aus einem konstanter Wert ungleich Null gebildet wird, die zweite Kenngröße in einem zweiten Betriebsfall aus mindestens einem Ist-Betriebsparameter der Kraftwerkskomponente und einem Gewichtungsfaktor berechnet wird, und in einem dritten Betriebsfall die zweite Kenngröße aus dem Wert Null gebildet wird.

8. Verfahren nach einem der Ansprüche 1 bis 7,
bei dem ausgehend von den ersten und zweiten Kenngrößen jeder Betriebsfall in eine einzige Kenneinheit umgerechnet wird.

9. Verfahren nach einem der Ansprüche 1 bis 8,
bei dem die ersten und zweiten Äquivalenzvorschriften anhand einer Gegenüberstellung der sich mit den vorbestimmten Kenngrößen vorermittelten Lebensdauer der Kraftwerkskomponente und der sich tatsächlich ergebenden Lebensdauer der Kraftwerkskomponente angepasst (20) werden.
